# EUROPEAN PATENT SPECIFICATION

(11) **EP 4 127 707 B1**
(45) Date of publication and mention of the grant of the patent: **21.05.2025**
(21) Application number: 21716177.7
(22) Date of filing: 31.03.2021
(51) Int. Cl.: G01N 30/86

(54) **MONITORING OF A CARRY OVER OF AN ANALYTE**
ÜBERWACHUNG DES ÜBERTRAGS EINES ANALYTEN
SURVEILLANCE DE TRANSFERT RÉSIDUEL D'UN ANALYTE

(30) Priority: 01.04.2020 EP 20167557
(43) Date of publication of application: 08.02.2023
(73) Proprietor: F. Hoffmann-La Roche AG, 4070 Basel (CH); Roche Diagnostics GmbH, 68305 Mannheim (DE)
(72) Inventor: INTELMANN, Daniel, 81477 München Süd (DE)
(74) Representative: Altmann Stößel Dick Patentanwälte PartG mbB
(86) International application number: PCT/EP2021/058432
(87) International publication number: WO 2021/198331

(56) References cited:
- WO-A1-2017/077401
- WO-A1-2019/203972
- DE-T5- 112017 007 538
- WEI ZENG ET AL: "A new approach for evaluating carryover and its influence on quantitation in high-performance liquid chromatography and tandem mass spectrometry assay", RAPID COMMUNICATIONS IN MASS SPECTROMETRY., vol. 20, no. 4, 28 February 2006 (2006-02-28), GB, pages 635 - 640, XP055722097, ISSN: 0951-4198, DOI: 10.1002/rcm.2353
- KARA L LYNCH: "CLSI C62-A: A New Standard for Clinical Mass Spectrometry", CLINICAL CHEMISTRY, vol. 62, no. 1, 1 January 2016 (2016-01-01), US, pages 24 - 29, XP055722042, ISSN: 0009-9147, DOI: 10.1373/clinchem.2015.238626

## Description

### Technical field

The present invention relates to a method for determining a carry over of an analyte from a previous sample into a sample of interest on a liquid chromatography mass spectrometer (LC-MS) device, the method comprising the following steps: (a) determining at least one chromatogram of said sample of interest on said LC-MS device; (b)determining a background height of the chromatogram; and (c) determining the carry over of the analyte from said previous sample into the sample of interest based on the background height. The present invention also relates to methods, systems, and computer program products related to the aforesaid method.

### Background art

Analyte carry over from sample to sample is one of the major limitations coming along with liquid chromatography, but primary sample handling and sample preparation contribute, too. The state of the art approach to evaluate the extent or risk of carry over is described by regulatory guidelines like CLSI C62-A (Lynch (2020), Clinical Chemistry 62(1):24-299). These guidelines suggest assessing carry over during method development as well as verification and validation phase by using a blank sample after a high concentrated sample. The resulting peak area of these blank samples is used to calculate the potential carry over. Zeng et al. (2006), Rapid Comm Mass Spectrom 20:635 teaches estimating the influence of the preceding sample on the peak area of an analyte in a following sample based on the concentration of the analyte in the preceding sample in an HPLC-MS system.

An evaluation of carry over during method development gives a general overview on the risk of carry over and its extent. But this approach is not suitable to provide information on an actual sample measurement. For batch mode analysis, usually a re-analysis of samples following high concentrated samples is triggered, but this is not feasible in the case of random access where the analyte of the previous sample is different to the analyte of the actual one.

The paper by Wei Zeng et al. "A new approach for evaluating carryover and its influence on quantitation in high-performance liquid chromatography and tandem mass spectrometry assay", Rapid Communications In Mass Spectrometry, vol. 20, no. 4, 28 February 2006, pages 635-640, relates to the evaluation of a carry over based on the estimation of a relative carry over being defined as the peak area ratio of a blank sample to the preceding sample.

### Problem to be solved

Thus, there is still a need in the art for means and methods assisting in detecting and, if possible, correcting for, carry over in LC-MS measurements.

### Summary

This problem is addressed by the methods, system and computer program product defined by the independent claims. Advantageous embodiments which might be realized in an isolated fashion or in any arbitrary combinations are listed in the dependent claims.

In accordance, the present invention relates to a method for determining a carry over of an analyte from a previous sample into a sample of interest on a liquid chromatography mass spectrometer (LC-MS) device, the method comprising the following steps:
(a) providing at least one chromatogram of said sample of interest on said LC-MS device;
(b)determining a background height of the chromatogram; and
(c) determining the carry over of the analyte from said previous sample into the sample of interest based on the background height.

The terms used herein are broad terms and are to be given their ordinary and customary meaning assigned to them by a person of ordinary skill in the art; thus, the terms used herein are, unless specified otherwise, not to be limited to a special or customized meaning. As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements. Also, as is understood by the skilled person, the expressions "comprising a" and "comprising an" preferably refer to "comprising one or more", i.e. are equivalent to "comprising at least one". Likewise, the term "determining an X" refers to determining one X, as well as as to determining more than one of X, e.g. two, three, or four of X. Also, the term "plurality" relates to a multitude, in an embodiment at least two, in a further embodiment, in a further embodiment at least three in a further embodiment at least for, in a further embodiment at least five, of the indicated items.

Further, as used in the following, the terms "preferably", "more preferably", "most preferably", "particularly", "more particularly", "specifically", "more specifically" or similar terms are used in conjunction with optional features, without restricting further possibilities. Thus, features introduced by these terms are optional features and are not intended to restrict the scope of the claims in any way. The invention may, as the skilled person will recognize, be performed by using alternative features. Similarly, features introduced by "in an embodiment" or similar expressions are intended to be optional features, without any restriction regarding further embodiments of the invention, without any restrictions regarding the scope of the invention and without any restriction regarding the possibility of combining the features introduced in such way with other optional or non-optional features of the invention.

As used herein, the term "about" relates to the indicated value with the commonly accepted technical precision in the relevant field, preferably relates to the indicated value ± 20%, more preferably ± 10%, most preferably ± 5%. Further, the term "essentially" indicates that deviations having influence on the indicated result or use are absent, i.e. potential deviations do not cause the indicated result to deviate by more than ± 20%, more preferably ± 10%, most preferably ± 5%. Thus, "consisting essentially of" means including the components specified but excluding other components except for materials present as impurities, unavoidable materials present as a result of processes used to provide the components, and components added for a purpose other than achieving the technical effect of the invention. For example, a composition defined using the phrase "consisting essentially of" encompasses any known acceptable additive, excipient, diluent, carrier, and the like. Preferably, a composition consisting essentially of a set of components will comprise less than 5% by weight, more preferably less than 3% by weight, even more preferably less than 1%, most preferably less than 0.1% by weight of non-specified component(s). As referred to herein, measured and calculated parameters are described on an exemplary basis; as the skilled person understands, the parameters may be modified by standard mathematical operations, in particular by multiplication, division, addition, subtraction, reciprocal forming, scaling, and other operations known to the skilled person; in an embodiment, references are adjusted accordingly, in particular by applying the same mathematical operations. Measured and calculated parameters may also be used in the calculation of a score, which may be calculated on the basis of one or more parameter values, which may optionally be weighted, and/or by further mathematical operations in particular as specified above, e.g. scaling.

The method for determining a carry over is an in vitro method. Moreover, it may comprise steps in addition to those explicitly mentioned above. For example, further steps may relate, e.g., to providing a sample for step a), or further calculations in step b) and/ or c). Moreover, one or more of said steps may be performed by automated equipment. **In** an embodiment, in particular steps b) and c) are performed by a processor, in particular by a computer, which may be configured as an evaluation device, as specified elsewhere herein.

The term "providing", as used herein, relates to making available the indicated information or object. Thus, in case of providing a chromatogram, the chromatogram may be provided as data, e.g. as a graphical representation, as a list of measurement values, e.g. as value pairs such as elution time/quantifier value pairs and/or elution time/qualifier value pairs, or as a mathematical model. The chromatogram may be provided via any medium deemed appropriate by the skilled person, in particular via an operative connection between an MS device and an evaluation device, via a data connection such as a data network, or via a data storage medium. In an embodiment, providing is determining as specified herein below.

The term "determining" is understood by the skilled person as referring to settling on, concluding on, or ascertaining a fact and/or data. Thus, in an embodiment, determining relates to a qualitative determination; in a further embodiment, to a semiquantitative determination; in a further embodiment, to a quantitative determination. Thus, "determining a carry over" includes establishing the fact that carry over occurred (qualitative determination), establishing whether the extent of carry over is within acceptable limits (semiquantitative determination), as well as establishing the quantity of carry over (quantitative determination). In an embodiment, determining relates to quantitative determination. Also, "determining a chromatogram" relates to measuring a chromatogram, specifically recording, and optionally storing on a suitable storage device, data points representing a signal of an LC/MS device recorded over the progress of an LC/MS run. As the skilled person understands, in the case of determining a chromatogram, determination in an embodiment is quantitative. Similarly, "determining a background height", in an embodiment, is quantitatively ascertaining the value of a background height as specified elsewhere herein; the term may, however, also relate to semiquantitative determination of background height, e.g. by determining whether the background height exceeds pre-determined exclusion criteria.

As used herein, the term "sample", also referred to as "test sample", relates to any type of composition of matter; thus, the term may refer, without limitation, to any arbitrary sample such as a biological sample. In an embodiment, the sample is a liquid sample, in a further embodiment an aqueous sample. In an embodiment, the test sample is selected from the group consisting of: a physiological fluid, including blood, serum, plasma, saliva, ocular lens fluid, lacrimal fluid, cerebrospinal fluid, sweat, urine, milk, ascites, mucus, synovial fluid, peritoneal fluid, and amniotic fluid; lavage fluid; tissue, cells, or the like. The sample may, however, also be a natural or industrial liquid, in particular surface or ground water, sewage, industrial wastewater, processing fluid, soil eluates, and the like. In an embodiment, the sample comprises or is suspected to comprise at least one chemical compound of interest, i.e. a chemical which shall be determined, which is referred to as "analyte". The sample may comprise one or more further chemical compounds, which are not to be determined and which are commonly referred to as "matrix". The sample may be used directly as obtained from the respective source or may be subjected to one or more pretreatment and/or a sample preparation step(s). Thus, the sample may be pretreated by physical and/or chemical methods, in an embodiment by centrifugation, filtration, mixing, homogenization, chromatography, precipitation, dilution, concentration, contacting with a binding and/or detection reagent, and/or any other method deemed appropriate by the skilled person. In, i.e. before, during, and/or after, the sample preparation step, one or more internal standard(s) may be added to the sample. The sample may be spiked with the internal standard. For example, an internal standard may be added to the sample at a predefined concentration. The internal standard may be selected such that it is easily identifiable under normal operating conditions of a mass spectrometry device. The concentration of the internal standard may be pre-determined and significantly higher than the concentration of the analyte.

As indicated above, the term "analyte", as used herein, relates to any chemical compound or group of compounds which shall be determined in a sample. In an embodiment, the analyte is a macromolecule, i.e. a compound with a molecular mass of more than 1000 u (i.e. more than 1 kDa). In a further embodiment, the analyte is a biological macromolecule, in particular a polypeptide, a polynucleotide, a polysaccharide, or a fragment of any of the aforesaid. In an embodiment, the analyte is a small molecule chemical compound, i.e. a compound with a molecular mass of at most 1000 u (1 kDa). In a further embodiment, the analyte is a chemical compound metabolized by a body of a subject, in particular of a human subject, or is a compound administered to a subject in order to induce a change in the subject's metabolism. Thus, in an embodiment, the analyte is a drug of abuse or a metabolite thereof, e.g. amphetamine; cocaine; methadone; ethyl glucuronide; ethyl sulfate; an opiate, in particular buprenorphine, 6-monoacatylmorphine, codeine, dihydrocodeine, morphine, morphine-3-glucuronide, and/or tramadol; and/or an opioid, in particular acetylfentanyl, carfentanil, fentanyl, hydrocodone, norfentanyl, oxycodone, and/or oxymorphone.

In an embodiment, the analyte is a therapeutic drug, e.g. valproic acid; clonazepam; methotrexate; voriconazole; mycophenolic acid (total); mycophenolic acid-glucuronide; acetaminophen; salicylic acid; theophylline; digoxin; an immuno-suppressant drug, in particular cyclosporine, everolimus, sirolimus, and/or tacrolimus; an analgesic, in particular meperidine, normeperidine, tramadol, and/or O-desmethyl-tramadol; an antibiotic, in particular gentamycin, tobramycin, amikacin, vancomycin, piperacilline (tazobactam), meropenem, and/or linezolid; an antieplileptic, in particular phenytoin, valporic acid, free phenytoin, free valproic acid, levetiracetam, carbamazepine, carbamazepine-10,11-epoxide, phenobarbital, primidone, gabapentin, zonisamid, lamotrigine, and/or topiramate. In an embodiment, the analyte is a hormone, in particular cortisol, estradiol, progesterone, testosterone, 17-hydroxyprogesterone, aldosterone, dehydroepiandrosteron (DHEA), dehydroepiandrosterone sulfate (DHEA-S), dihydrotestosterone, and/or cortisone; in an embodiment, the sample is a serum or plasma sample and the analyte is cortisol, DHEA-S, estradiol, progesterone, testosterone, 17-hydroxyprogesterone, aldosterone, DHEA, dihydrotestosterone, and/or cortisone; in an embodiment, the sample is a saliva sample and the analyte is cortisol, estradiol, progesterone, testosterone, 17-hydroxyprogesterone, androstendione, and/or cortisone; in an embodiment, the sample is a urine sample and the analyte is cortisol, aldosterone, and/or cortisone. In an embodiment, the analyte is a vitamin, in an embodiment vitamin D, in particular ergocalciferol (Vitamin D2) and/or cholecalciferol (Vitamin D3) or a derivative thereof, e.g. 25-hydroxy-vitamine-D2, 25-hydroxy-vitamine-D3, 24,25-dihydroxy-vitamine-D2, 24,25-dihydroxy-vitamine-D3, 1,25-dihydroxy-vitamine-D2, and/or 1,25-dihydroxy-vitamine-D3. In a further embodiment, the analyte is a metabolite of a subject.

The term "carry over", in principle, relates to any transfer of at least one constituent from one sample into a second sample, in an embodiment is transfer of constituents from one sample into a second sample. In the context of the present description, said transfer is transfer of sample constituents from a sample handled in an analytic device, in particular an LC-MS device as specified elsewhere herein, at a first point in time into a second sample handled in said analytic device at a second, later, point in time, in an embodiment handled in said analytic device directly following the first sample. As will be understood, the aforesaid second sample is the sample in which carry over shall be determined; and at least the aforesaid second sample is a sample in which the analyte shall be determined. In accordance with the above, the aforesaid first sample is also referred to as the "previous sample", and the aforesaid second sample is also referred to as the "sample of interest". As is understood by the skilled person, in LC-MS measurements, carry over may occur before the LC step, resulting essentially in an unwanted increase in the analyte peak caused by analyte from the previous sample (peak carry over). Carry over may, however, also occur after the LC step, causing an increase of the background in a chromatogram (background carry over). As was found surprisingly in the work underlying the present invention, the two types of carry over correlate, in particular are directly proportional, such that measuring background carry over can be used to determine and, if required correct for, peak carry over.

The term "liquid chromatography mass spectrometer device", abbreviated as "LC-MS device", is understood by the skilled person. In an embodiment, the term relates to a device configured for performing a combination of liquid chromatography (LC) with mass spectrometry (MS). Thus, the device, in an embodiment, comprises at least one LC unit, and at least one MS unit, wherein the LC unit and the MS unit are coupled via at least one interface. As used herein, the term "liquid chromatography (LC) unit", in an embodiment, relates to an analytical module configured to separate one or more analytes of interest of a sample from other components of the sample via liquid chromatography, in an embodiment for detection of the one or more analytes with the mass spectrometry device. The LC may be based on any separation principle deemed appropriate by the skilled person; in an embodiment, the LC is reverse phase chromatography, hydrophobic interaction chromatography, ion exchange chromatography, size exclusion chromatography, affinity chromatography, or chiral chromatography; in a further embodiment, the LC is reverse phase chromatography. The LC device may comprise at least one LC column. For example, the LC device may be a single-column LC device or a multi-column LC device having a plurality of LC columns. The LC column may have a stationary phase through which a mobile phase is pumped in order to separate and/or elute and/or transfer the analyte(s) of interest. The LC unit may be or may comprise at least one high-performance liquid chromatography (HPLC) unit and/or at least one micro liquid chromatography (µLC) device. As used herein, the term "mass spectrometry unit", in an embodiment, relates to a mass analyzer configured for detecting at least one analyte based on a mass to charge ratio of the analyte or a fragment thereof. The mass spectrometry unit may be or may comprise at least one quadrupole mass spectrometry device. The interface coupling the LC unit and the MS unit may comprise at least one ionization source configured for generating molecular ions and for transferring the molecular ions into the gas phase. In an embodiment, the MS unit is a tandem mass spectrometry (MS/MS) unit, in a further embodiment, a triple quadrupole MS/MS, in a further embodiment in Multiple Reaction Monitoring (MRM) mode.

The term "chromatogram" is known to the skilled person. In an embodiment, the term relates to a correlation plot of a quantitative measure of signals obtained from a sample and determined by an MS detector with the progress of a chromatographic separation, in an embodiment over time, e.g. retention time, and/or elution volume. In an embodiment, said quantitative measure of signals correlates with the concentration of at least part of sample constituents, in particular with the analyte; thus, the quantitative measure of signals may in particular be a signal intensity. Thus, in an embodiment, the chromatogram is an MS chromatogram, in a further embodiment an MS/MS chromatogram. As will be understood by the skilled person, the aforesaid representation may be, but does not have to be, a graphical representation; the representation may, however, also be provided e.g. as a list of value pairs, e.g. elution time / quantifier value pairs and/or elution time / qualifier value pairs, or as a mathematical model. In an embodiment, said quantitative measure of signals comprises an analyte signal intensity and/or an internal standard signal intensity. In an embodiment, said quantitative measure of signals comprises an analyte quantifier, an internal standard quantifier, an analyte qualifier and/or an internal standard qualifier. Thus, in an embodiment, in particular in case the MS is tandem MS, determining at least one chromatogram comprises measuring at least one of an analyte quantifier, an internal standard quantifier, an analyte qualifier and/or an internal standard qualifier over time and/or elution time, as specified above. As the skilled person understands, elution time may be replaced by any other measure of LC progress deemed appropriate by the skilled person, in particular by elution volume or by retention time.

The terms "quantifier" and "qualifier", in the context of the present description, are understood by the skilled person. In an embodiment, the terms relate to signals of fragments of an analyte generated in tandem MS, wherein generally the most abundant and/or most reliably detected fragment is used for quantifying the analyte (analyte quantifier), whereas a second transition (fragment) is used for confirmation of identity of the analyte (analyte qualifier). Corresponding terms are frequently abbreviated as AQN (analyte quantifier) and AQL (analyte qualifier). The values of the two parameters are usually determined as signal intensity of ions having the corresponding m/z value, in particular determined as peak areas, e.g. after peak integration. These values may be correlated with LC progress to result in the chromatogram of the present description. As is understood by the skilled person, the terms "qualifier" and "quantifier" and values thereof are used in the art to refer to raw values measured as signal intensities, but also to values derived therefrom, in particular by peak integration. Thus, unless otherwise indicated, the terms quantifier and qualifier are used for signal intensities as measured, including values derived therefrom by standard mathematical operations, in particular multiplication, ratio calculation, curve smoothing, or calculation of an average, but not to integrated values derived thereof, which are referred to as "integrated qualifier" and "integrated quantifier", respectively. Thus, in an embodiment, the values, in particular if used for the calculation of quantifier/qualifier ratios, are single-cycle values, i.e. intensities determined in one scan cycle, selected ion monitoring (SIM) cycle, or multiple reaction monitoring (MRM) cycle. The expression "determining a quantifier to qualifier ratio" relates to calculating the ratio by dividing the value of the qualifier by the value of the quantifier; similarly, the expression "determining an integrated quantifier to integrated qualifier ratio" relates to calculating the ratio by dividing the value of the integrated qualifier by the value of the integrated quantifier. In an embodiment, the integrated AQN/AQL ratio is a compound-specific and measurement method-specific parameter of an analyte. As will be understood, the above applies to measurement of internal standard quantifiers and qualifiers mutatis mutandis.

In an embodiment, step b) comprises steps b1) identifying a peak corresponding to the analyte in the chromatogram; and b2) determining an upper and a lower peak boundary of said peak. In a further embodiment, step b) comprises step b3) determining at least one minimum signal intensity value within the upper and lower peak boundary.

The term "peak", as used herein, relates to at least one local maximum of a chromatogram. Correspondingly, peak integration relates to at least one mathematical operation and/or mathematical algorithm for determining a peak area enclosed by a peak of a chromatogram. Specifically, the integration of the peak may comprise identification and/or measurement of curve characteristics of the chromatogram. The peak integration may comprise one or more of peak detection, peak finding, peak identification, peak fitting, peak evaluation, determining peak start and/or peak end, determining of background, and determining of basis line. The peak integration may allow determining of one or more of peak area, retention time, peak height, and peak width. In an embodiment, peak integration is automatic peak integration, i.e. peak integration performed by at least one computer and/or computer network and/or machine. Specifically, the automatic peak integration may be performed without manual action or interaction with a user.

The term "background" is known to the skilled person. In an embodiment, the term relates to the signal measured by a detection device, e.g. an MS device, which is not being caused by a peak as specified herein above. In accordance, the term "background height" relates to a quantitative measure of background in a chromatogram; thus, the term background height may also relate to a value of a background height. The skilled person is, in principle, able to determine background height, e.g. by determining the offset of a chromatogram graph from the zero line, by determining the area under the baseline, and the like. In an embodiment, background height is determined close to an analyte peak, in particular as as at least one minimum signal intensity value within the upper and lower peak boundary of the analyte peak. In a further embodiment, background height is determined shortly upstream of the upper peak boundary and/or shortly downstream of the lower peak boundary, the term "shortly" in this case referring to up to 1 peak width, in an embodiment up to ½ peak width, in a further embodiment up to ¼ peak width upstream or downstream, respectively. In an embodiment, background height is determined as part of a peak integration process, which is, preferably, performed by automated equipment. **In** an embodiment, background height is determined as average of values, e.g. as a median, a mean, or another parameter indicative of an average deemed appropriate by the skilled person. **In** an embodiment, at least two, in a further embodiment at least five, in a further embodiment at least ten single cycle values are used for said average calculation; in an embodiment, of from 2 to 1000, in a further embodiment of from 5 to 250, in a further embodiment of from 10 to 100 single cycle background values are used for said average calculation, the term "single cycle" referring to a single cycle of signal intensity measurement by the MS unit generating the recorded signal.

According to step c) of the method, determining the carry over of the analyte from the at least one previous sample into the sample of interest is based on the background height, i.e. on the value of the background height determined in step b). Thus, the background height determined as specified herein above, in an embodiment, is correlated with carry over. In an embodiment, the correlation is a quantitative relationship, in an embodiment a direct proportionality, in a further embodiment comprising at least one linear function, at least one quadratic function, at least one rational function, and/or at least one sigmoid function. Thus, the correlation may be represented by any mathematical, graphical, or other representation reflecting the above correlation. In an embodiment, the relationship is linear above a lower threshold of background height. Methods for determining the aforesaid correlation and for establishing appropriate representations thereof are described herein below and in particular in the Examples. In an embodiment, the peak area of the analyte peak is determined after step a), i.e. after establishing the chromatogram as specified. In such case, a correlation of the peak area and background height with a corrected peak area or value derived therefrom may be established, such that a corrected analyte value can be stablished directly from such a three-parameter correlation.

As indicated herein below, depending on the result of determining step c), the method for determining a carry over further may comprise the step of marking the result of step a) as unreliable and, optionally, initiating a re-run of said sample of interest, in case the result of step c) indicates a carry over of the analyte from said at least one previous sample exceeding a pre-determined threshold. Thus, the LC-MS device may not provide a determination for the analyte, may indicate that the result of determination is unreliable, and/or may cause a repeat at least of the chromatogram determination, in an embodiment all of steps a) to c) of the method for the affected sample. In an embodiment, said repeat is performed directly after a control sample lacking the analyte or directly after a sample with known low concentration of the analyte. In a further embodiment, a resulting amount or concentration determined from the chromatogram established in step a) may be corrected for the carry over of the analyte from said at least one previous sample. As specified herein above, step b) of the method provides a background height, which correlates with carry over, enabling the skilled person to correct an amount or concentration of an analyte determined from the chromatogram established in step a) for the carry over that occurred. Thus, a corrected amount or concentration of the analyte may be calculated. Exemplary methods for quantifying the aforesaid correlation are described elsewhere herein.

In an embodiment, the method further comprises at least one confirmation step, wherein the confirmation step comprises determining the reliability of the background height; i.e., in an embodiment, the method further comprises a step of providing an evaluation whether an increased background value is caused by carry over. As will be understood, the confirmation step is optional, since for quality control purposes it may be sufficient to establish that carry over possibly confounded the values measured for an analyte. In an embodiment, determining reliability of the background height comprises analyzing a quantifier signal and/or a qualifier signal of background data points, in an embodiment of background data points used for determining background height of the chromatogram. In a further embodiment, determining reliability of the background height comprises analyzing a quantifier signal and a qualifier signal, in particular a ratio of a quantifier signal to a qualifier signal, i.e. a quantifier/qualifier ratio, of background data points, in an embodiment of background data points used for determining background height of the chromatogram. In an embodiment, determining reliability of the background height comprises determining a quantifier/qualifier ratio shortly upstream of the upper peak boundary and/or shortly downstream of the lower peak boundary, in an embodiment shortly upstream of the upper peak boundary, in a further embodiment shortly downstream of the lower peak boundary, the term "shortly" having the meaning as specified herein above. In an embodiment, the values, in particular if used for the calculation of quantifier/qualifier ratios, are single-cycle values, as specified herein above.

In an embodiment, determining reliability of the background height comprises determining a reliability parameter from the aforesaid signals and/or parameters. It was found that as a consequence of increasing carry over, the values determined for the analyte quantifier (AQN) and the analyte qualifier (AQL) increase in background measurement, and the values of the quantifier/qualifier ratio, approximate a reference quantifier/qualifier ratio, said reference quantifier/qualifier ratio being analyte specific and system specific, i.e. being assay specific. In an embodiment, the reference quantifier/qualifier ratio is the quantifier/qualifier ratio determined for an essentially pure analyte and/or in a carry over-free analytical run, in a further embodiment, the reference quantifier/qualifier ratio is the integrated quantifier/qualifier ratio determined for an essentially pure analyte and/or in a carry over-free analytical run. Thus, in an embodiment, reliability of the background height determination is confirmed in case the values of the quantifier/qualifier ratio approximate a reference quantifier/qualifier ratio.

Also as a consequence of increasing carry over, the variability of values determined for the analyte quantifier (AQN) and the analyte qualifier (AQL) in background measurements was found to decrease, thus, in an embodiment, reliability of the background height determination is confirmed in case the variability of values of the quantifier/qualifier ratio is below a reference, in an embodiment as specified elsewhere herein. Thus, in an embodiment, determining reliability of the background height comprises determining an average, in an embodiment a mean, in particular a median, an arithmetic mean, or a geometric mean of quantifier/qualifier ratios of background data points, in an embodiment of background data points used for determining background height of the chromatogram, which may be a reliability parameter. In an embodiment, said average value is compared to a pre-determined reference. In a further embodiment, a measure of variability of background data points is provided, in an embodiment as reliability parameter, in particular of a quantifier signal, of a qualifier signal, and/or of a quantifier/qualifier ratio; such a measure of variability of background data points may be any variability parameter deemed appropriate by the skilled person, in particular a coefficient of variation. It is, however, also envisaged that e.g. a standard deviation or an equivalent parameter is determined.

The term "reference", as used herein, refers to a discriminator which allows assessing the reliability of carry over determination. Such a discriminator may be a value of a reliability parameter, e.g. of the average or variation parameter as specified elsewhere herein, indicative of carry over. In an embodiment, the reference is a quantitative indicator, in a further embodiment is a value, e.g. a threshold value, is a range, e.g. a range of values indicative of reliable carry over determination, is a score, or is any other value or range deemed appropriate by the skilled person. In an embodiment, depending on the type of reference selected, the reference is an analyte specific, device specific, and/or method specific parameter, in a further embodiment is an analyte specific parameter. Methods for establishing appropriate references are provided elsewhere herein on an exemplary basis. In view of the above, the reference is, in an embodiment, determined using the same type of LC-MS device as is used in the method specified herein. In an embodiment, in case a quantifier signal and/or a qualifier signal of background data points is analyzed, the reference is a value of a quantitative indicator of quantifier signal and/or a qualifier signal variability and/or of deviation of quantifier signal and/or a qualifier signal from expected values. Thus, in case a quantifier/qualifier ratio is determined, the reference may be a quantifier/qualifier ratio or an integrated quantifier/qualifier ratio determined for pre-purified or essentially pure analyte and/or in a carry over-free analytic run. The skilled person is able to determine appropriate reference values, e.g. during assay development; on an exemplary basis, in an embodiment, the reference is a threshold value or a reference range, e.g. in case a quantifier/qualifier ratio is determined. Thus, in case an average, in particular a median, is determined, the reference may be a (internal) quantifier/qualifier ratio of ± at most 10 times , in a further embodiment ± at most 2 times, in a further embodiment ± at most 1.5 times, in a further embodiment ± at most 1 times, in a further embodiment ± at most 0.5 times, in a further embodiment ± at most 0.1 times the value determined for an essentially pure analyte and/or in a carry over-free analytic run; thus, the reference range may e.g. be a (internal) quantifier/qualifier ratio determined for an essentially pure analyte and/or in a carry over-free analytic run ±1000%, in an embodiment ±100%, in a further embodiment ± 50%, in a further embodiment ±20%, in a further embodiment ± 10%. In such case, a value below or corresponding to the threshold or within the reference range, in an embodiment, is indicative of a reliable carry over determination. In a further exemplary embodiment, in case a coefficient of variation is determined as a variation parameter, the reference is a threshold value of at most 0.5, in an embodiment at most 0.4, in a further embodiment at most 0.3, or a mathematically corresponding value; in such case, a value below or equal to the threshold, in an embodiment, is indicative of a reliable carry over determination.

The term "quality control", as used herein, is known to the skilled person. In an embodiment, quality control is the process of ensuring that processes performed and/or goods produced by an entity are in conformity with pre-defined quality criteria. In a further embodiment, quality control in sample measurement, in particular in measurement of medical samples such as patient samples, e.g. in clinical diagnostics and/or clinical chemistry, comprises ensuring that the analysis results obtained with a specific measuring method correspond to the results obtainable with a gold standard method and, therefore, in an embodiment correspond to the results theoretically obtainable, within a pre-specified range. Thus, in an embodiment, the method for determining a carry over comprises as one or more further steps, depending on the result of determining step c), one or more of: i) marking the result of step a) as unreliable in case the result of step b) indicates a background height exceeding a pre-determined threshold and, optionally, initiating a re-run of said sample of interest; ii) marking the result of step a) as unreliable in case the result of step c) indicates a carry over of the analyte from said at least one previous sample exceeding a pre-determined threshold and, optionally, initiating a re-run of said sample of interest; and iii) correcting the result of step a) for the carry over of the analyte from said at least one previous sample, in an embodiment as specified elsewhere herein.

As used herein, the term "internal standard", in an embodiment, relates to an analyte which is present with a defined concentration in a sample. Thus, in an embodiment, the concentration of the internal standard is known; it is, however, also envisaged that the concentration of the standard is unknown, but is the same for at least the sample of interest and at least one calibration sample; in such case, in an embodiment, the concentration of the internal standard is the same for all samples analyzed. The internal standard, in an embodiment, is structurally similar to the analyte, in a further embodiment is structurally identical to the analyte. In particular in the latter case, in an embodiment, the internal standard is an isotope-labelled molecule, in particular an isotope-labelled version of the analyte, e.g. a ²H (deuterated), ¹⁵N, and/or ¹³C-labelled derivative. The internal standard sample may be a sample comprising at least one internal standard substance with a known, e.g. pre-determined, concentration. For further details with respect to the standard sample, reference is made e.g. to EP 3 425 369 A1.

Advantageously, it was found in the work underlying the present invention that the degree of carry over between two samples can be determined by measuring background height as described herein, such that samples being affected by a non-tolerable degree of carry over can be detected by determining background height. Moreover, it was found that there is a proportional relationship between peak carry over and background height, such that quantitative correction for carry over is possible by means of background height determination. Furthermore, it was found that background height data, in particular single cycle background data points, can be used to verify reliability of carry over determination.

The definitions made above apply mutatis mutandis to the following. Additional definitions and explanations made further below also apply for all embodiments described in this specification mutatis mutandis.

The present invention further relates to a system for determining a concentration of at least one analyte in a sample comprising:
(I) at least one liquid chromatography mass spectrometer (LC-MS) device, wherein the LC-MS device is configured for measuring the analyte in the sample and for determining at least one chromatogram, and
(II) at least one evaluation device, wherein the evaluation device is configured to determine a background height of the chromatogram and for determining a carry over based on the background height.

The term "system", as used herein, relates to different means which are operatively linked to each other. Said means may be implemented in a single physical unit or may be physically separated units which are operatively linked to each other. Suitable components and their properties are described elsewhere herein below and also herein above in the context of the method for determining a carry over. Consequently, the methods of the present invention can be implemented by the system specified herein. Thus, in an embodiment, the device is configured to perform the method for determining a carry over of an analyte as specified elsewhere herein, the method for conducting at least one measurement as specified elsewhere herein, and/or the method for determining a relationship between a background height and a carry over of an analyte as specified elsewhere herein. The system may comprise further devices or units, in particular a data collector, an output unit, a communication interface, and/or any other device or unit deemed appropriate by the skilled person.

The LC-MS device and means and methods for determining at least one chromatogram have been described herein above in the context of the method for determining a carry over.

The term "evaluation device" generally refers to an arbitrary device adapted to perform the method step(s) as described above, in an embodiment by using at least one data processing device and, in a further embodiment, by using at least one processor and/or at least one application-specific integrated circuit. Thus, as an example, the at least one evaluation device may comprise at least one data processing unit having a software code stored thereon comprising a number of computer commands. The evaluation device may provide one or more hardware elements for performing one or more of the indicated operations and/or may provide one or more processors with software running thereon for performing one or more of the method steps.

As used herein, the term "data collector" relates to any arbitrary storage unit configured for storing data, in particular data points determined by the LC-MS device, chromatograms, background heights determined, results of carry over determinations, and/or recommendations provided and/or decisions taken on further proceeding with regards to the sample. In an embodiment, the data collector comprises at least one database configured for receiving and/or storing at least one chromatogram. In an embodiment, the data collector comprises at least one database comprising one or more reference values. In an embodiment, the data collector comprises at least one database comprising data on the correlation between background height and carry over.

The term "output unit", as used herein, relates to any arbitrary unit configured for a transfer of information from the system to another entity, wherein another entity may be a further data processing device and/or a user. Thus, the output device may comprise a user interface, such as an appropriately configured display, or may be a printer. The output unit may, however also be an indicator, e.g. an indicator lamp, indicating e.g. detection of carry over.

The term "communication interface" is understood by the skilled person to relate to any arbitrary interface configured for exchange of information, in particular exchange of data. Such data exchange may be achieved by a permanent or temporary physical connection, such as coaxial, fiber, fiber-optic or twisted-pair, 10 BASE-T cables, storage unit connectors, such as USB, firewire, and similar connectors. Alternatively, it may be achieved by a temporary or permanent wireless connection using, e.g., radio waves, such as Wi-Fi, LTE, LTE-advanced or Bluetooth.

The present invention also relates to a method for conducting at least one measurement of an analyte in a sample using at least one liquid chromatography mass spectrometer device, the method comprising the following steps:
(A) conducting at least one first measurement on a first sample;
(B) conducting at least one second measurement on a second sample;
(C) determining a carry over from the first sample into the second sample with the method for determining a carry over according to the method for determining a carry over of the present invention.

The method for conducting at least one measurement is an in vitro method. Moreover, it may comprise steps in addition to those specifically mentioned. Further steps may relate e.g. to steps of sample pre-treatment before step (A), to steps of quality control as specified herein above, or to steps of correcting a result of analyte measurement for carry over as specified herein above. Moreover one or more steps may be assisted by automated equipment. It is, however, also envisaged that the complete method is performed in an automated manner, e.g. in a high-throughput analysis setting.

The term "measurement of an analyte in a sample" is understood by the skilled person. In an embodiment, the term relates to a qualitative, semi-quantitative, or quantitative determination of the amount of analyte in a sample, in an embodiment to a quantitative determination of the amount of analyte in a sample. As used herein, the term "amount" of an analyte relates to any quantitative measure of the analyte, and is equivalent to other corresponding measures such as mass fraction, concentration, which can be calculated from the amount in case sample mass or sample volume is known. Thus, the result of measurement of an analyte in a sample may be expressed in any unit deemed appropriate by the skilled person, including arbitrary units, measures of weight, of mass fraction, of concentration, and the like, or measures derived therefrom, e.g. international units according to a pre-defined definition. In accordance, the expression "conducting at least one first measurement" and "conducting at least one second measurement" relate to measuring an analyte in a first and a second sample, respectively, as specified above.

Methods for determining the amount of an analyte by LC-MS are, in principle, known to the skilled person. In an embodiment, the method comprises quantitatively determining an amount of an analyte in a sample by determining a peak area of the analyte (analyte peak area); in a further embodiment, further a peak area of an internal standard is determined (IS peak area) and a ratio of the analyte peak area and the IS peak area is determined and, in an embodiment, said ratio is compared to a calibration function, whereby a concentration value is determined. Corresponding methods are known to the skilled person. In a further embodiment, said amount of the analyte is corrected by performing at least steps b) and c) of the method for determining a carry over, and correcting the amount determined for the carry over determined, in an embodiment by subtracting the carry over determined from the amount of the analyte determined for the second sample.

The present invention further relates to a method for determining a relationship between a background height and a carry over of an analyte on a liquid chromatography mass spectrometer device, the method comprising the following steps:
(i) conducting at least one first measurement for a first sample;
(ii) conducting at least one second measurement for a second sample and determining at least one chromatogram thereof, wherein said second sample is devoid of said analyte, in an embodiment is a control sample, in a further embodiment is a buffer control sample, a blank control sample, or a matrix control sample;
(iii) determining an apparent amount or a signal corresponding thereto of the analyte in said second sample;
(iv) determining a background height of the chromatogram; and
(v) repeating steps (i) to (iv) for at least two further first samples, said first samples comprising non-identical concentrations of said analyte,
(vi) correlating the apparent amount of the analyte or a signal corresponding thereto determined in steps (iii) with the background heights determined in step (iv),
(vii) thereby, determining a relationship between a background height and a carry over of an analyte.

The method for determining a relationship is an in vitro method; moreover, the method may comprise further steps not specifically referred to. In particular, the method may comprise performing steps i) to iv) with a first sample devoid of analyte. Some or all steps of the method may be assisted or performed by automated equipment.

The term "apparent amount" of an analyte relates to an amount detected by the LC-MS method. Thus, the apparent amount is the amount measured for the analyte in the absence of correction for carry over.

The term "determining a relationship between a background height and a carry over" is understood by the skilled person in view of the present disclosure. **In** an embodiment, the term relates to establishing a graphical and/or mathematical representation of the correlation between background height and carry over, as specified herein above and in the examples. **In** an embodiment, the relationship is a linear relationship, in a further embodiment, the relationship is linear above a threshold value.

The invention further discloses and proposes a computer program product having program code means, in order to perform the method according to the present invention in one or more of the embodiments enclosed herein when the program is executed on a computer or computer network. Specifically, the program code means may be stored on a computer-readable data carrier.

### Figure Legends

- Fig. 1:: Correlation between Analyte Quantifier (AQN) peak area of a previous sample (x-axis) and Analyte Quantifier (AQN) peak area of a blank sample (current sample, y-axis).
- Fig. 2:: Examples for AQN mass traces showing effects of carry over; 1: blank sample; 2: sample with medium amount of analyte; 3: blank sample; 4: sample with high amount of analyte; 5: blank sample; arrows indicate that sample 3 was measured immediately following sample 3, and sample 5 was measured immediately following sample 4; the lower row shows the same chromatograms as the upper row, but at higher magnification (different scale on y-axis).
- Fig. 3:: Correlation of the two types of carry over - background height (x-axis) and AQN peak area (y-axis).
- Fig. 4:: Single cycle ratios used as confirmatory measures of carry over. Upper row: exemplary chromatograms of signal intensity (AQN (upper lines) and AQL (lower lines), respectively), over time; middle row: single values over time and medians of AQN/AQL ratios of the data points of the upper row; lower row: coefficient of variation of the AQN/AQL ratios of the data points of the upper row.
- Fig. 5:: Linear calibration function of testosterone (40 pg/mL-200 ng/mL) in the LC-MS method.
- Fig. 6:: Correlation between background height and carry over peak area in the testosterone measurements of Example 3.

The following Examples shall merely illustrate the invention. They shall not be construed, whatsoever, to limit the scope of the invention.

### Example 1: Correlation between carry over and background height

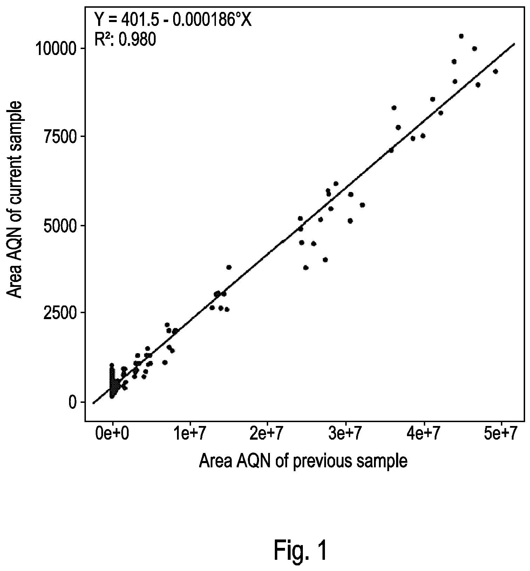

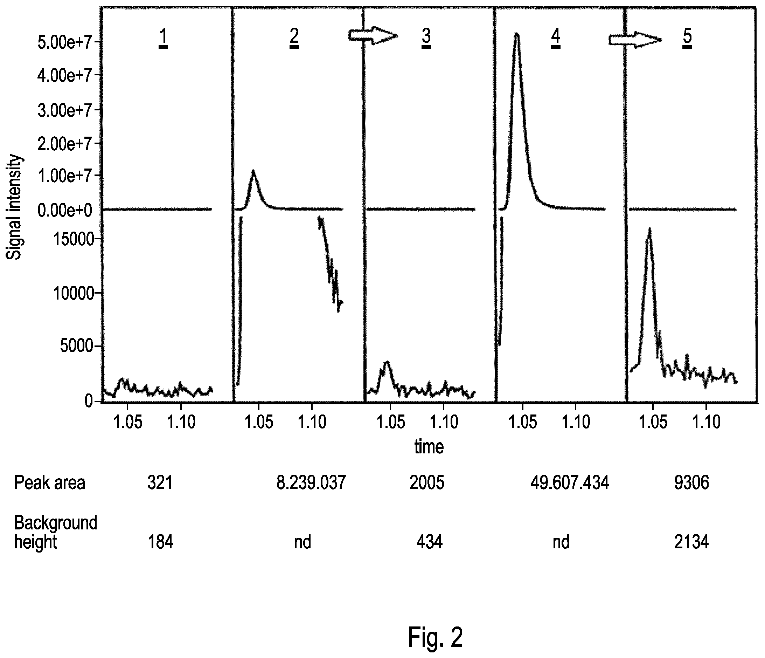

In an experimental LC-MS setup data were generated of high concentrated samples followed by blank samples; as shown in Fig. 1, a correlation between analyte peak area of blank samples to the analyte peak area of the previous samples was observed. The slope of this function is a measure for the extent of carry over. Analyte carry over typically occurs in two forms, as a peak from carry over before LC column and as broad baseline increase (background signal) from carry over after LC column (Fig. 2).

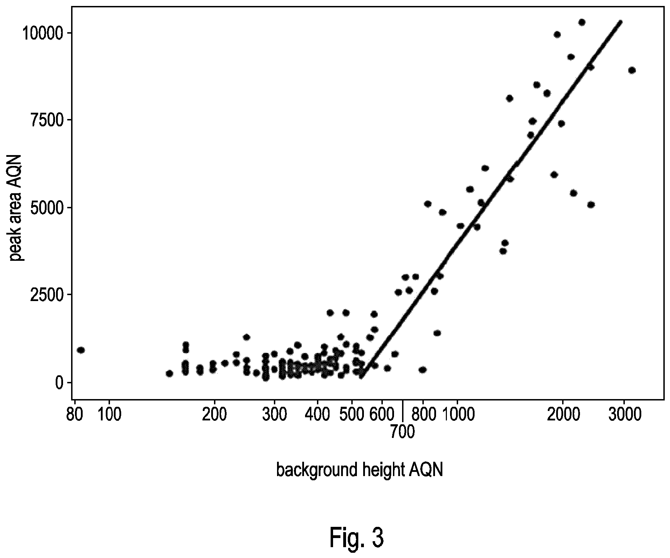

While both types of carry over can be measured within analyte free samples like blank samples, double blanks, or solvent samples, only the background increase can be measured within a real patient sample. Hence, result deviation by carry over cannot be directly measured. Unexpectedly, both types of carry over were found to show a rather clear correlation (Fig. 3). Thus, a background signal can be used to monitor carry over within the sample measured. Using this correlation, calculation of the effect of carry over on the quantified result of patient samples can be estimated.

### Example 2: Confirmation of carry over measurements

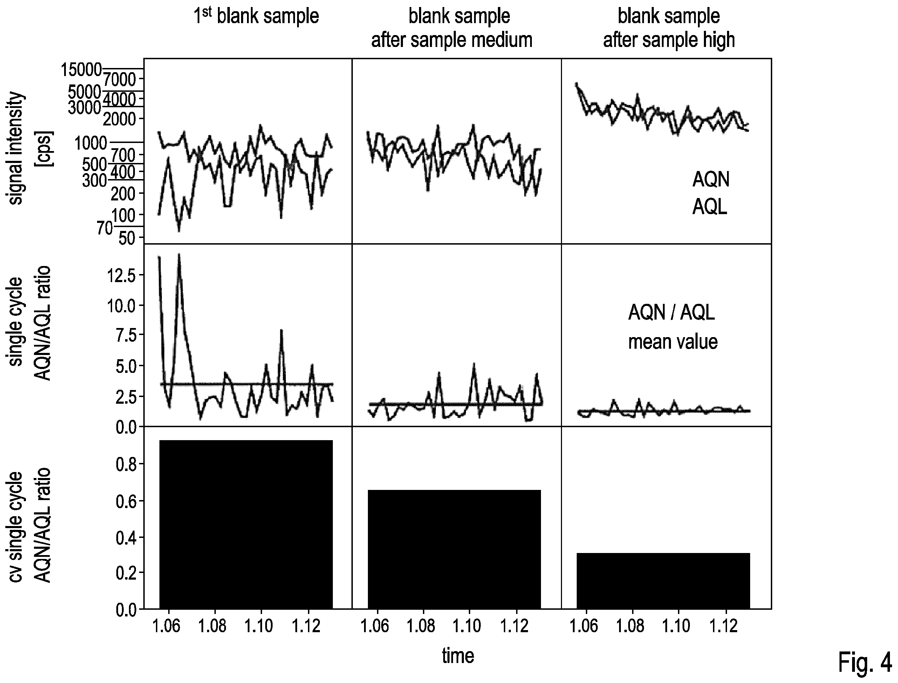

In principle, increase of background signal can have several causes. Typical contributors are chemical noise (interferences), background interferences, instrument noise, and carry over. Particularly instrument noise changes over the time as it is a function of ion source aging and detector aging/voltage. In order to distinguish effects by carry over from unspecific sources of background signal increase, the quantifier/qualifier ratio of every single data point (single cycle ratios) can be used to confirm this finding by comparing against target values. Moreover the coefficient of variation (cv) of single cycle ratios can be used for confirmation, too (Fig. 4).

### Example 3: Application in Testosterone measurement

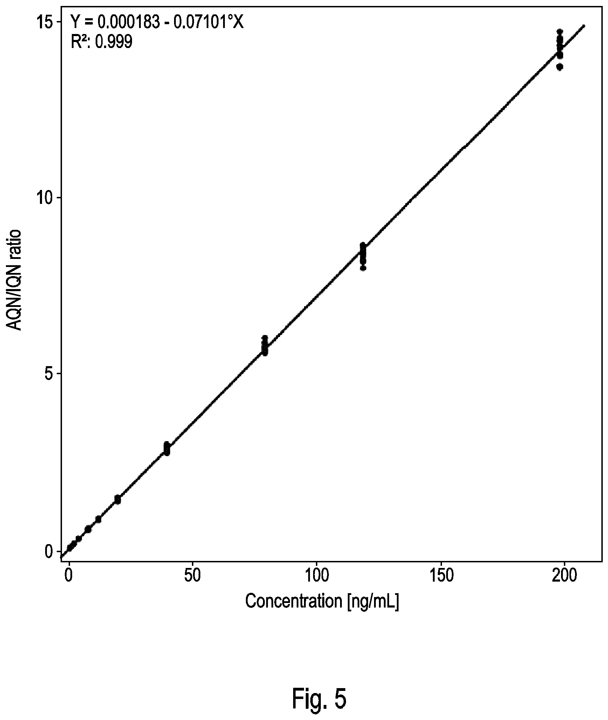

Concentration of testosterone in patient samples can be determined by reading out the concentration value for the measured peak area ratio of analyte quantifier and internal standard quantifier (AQN/IQN) by means of a calibration function (Fig. 5).

Three different samples were compared. Sample 1 with very low analyte concentration was measured after a very high concentrated sample. Sample 2 with low analyte concentration was measured after a high concentrated sample and sample 3 with medium concentration was measured after a very high concentrated sample.

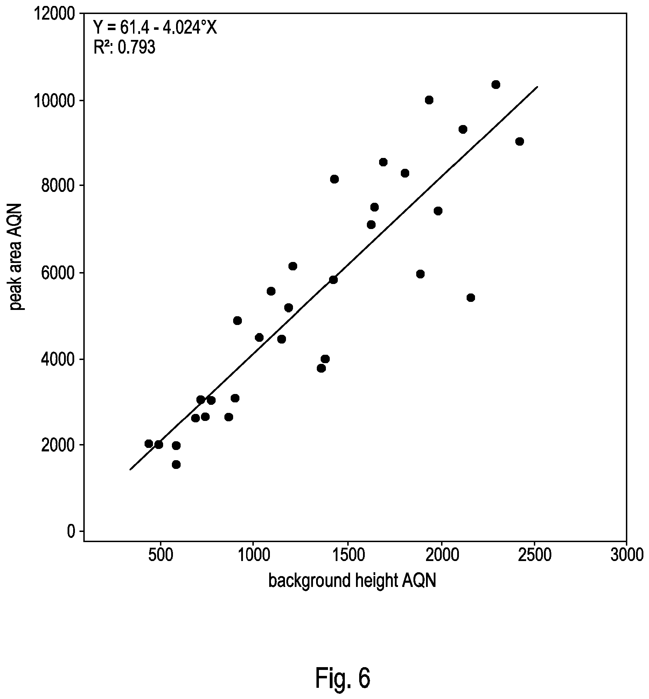

Using the correlation according to Fig. 6, measured values could be validated for carry over; results are summarized in Table 1:
Column 2 shows values of peak area AQN, peak area IQN, AQN/IQN ratio calculated therefrom, as well as background height determined for the respective samples. Column 3 shows the analyte concentration calculated from the AQN/IQN ratio of column 2.

Column 4 shows the apparent AQN peak area contributed by carry over, determined based on background height and the correlation according to Fig. 6, as well as the contribution of carry over to absolute concentration and the fraction of this contribution relative to the calculated concentration. In conclusion, in sample 1, 62% of the measured concentration was actually caused by carry over.

Column 5 of Table 1 shows confirmatory measures: the respective upper rows show medians of single cycle AQN/AQL ratios calculated for data points shortly outside peak boundaries, pre-determined reference ranges, and the result of a comparison between the respective value and the reference, OK referring to the measured value lying within the reference range, i.e. confirming carry over, NO indicating the value lying outside the reference range, i.e. not confirming carry over. The respective lower rows show coefficients of variation (cv) of single cycle AQN/AQL ratios calculated for data points shortly outside peak boundaries, pre-determined reference ranges, and the result of a comparison between the respective value and the reference, OK and NO having the meanings as indicated above.

As shown in Table 6, in samples 1 and 3 interference by carry over is confirmed, although the interference in sample 3 is only minor. In contrast, there is no apparent carry over in the measurement for sample 2.

### Literature:

EP 3 425 369 A1
Lynch (2020), Clinical Chemistry 62(1):24-299

**Table 1: Summarized results**

| sample | peak area AQN - peak area IQN - AQN/IQN ratio - background height | Calculated analyte conc. | estimated carry over: peak area - abs. conc. - rel conc. (% of result) | confirmatory measures: single cycle ratios (scr); acceptance range or cut off; check result |
|---|---|---|---|---|
| 1 | 5118 - 5.55 x 10⁵- 0.0092 - 823 | 0.13 ng/mL | 3413 - 0.08 ng/mL- 62 % | median scr 1.4; (1.2 +/- 0.4); OK |
| | | | | cv scr 34 %; (< 50%); OK |
| 2 | 35316- 6.07 x 10⁵- 0.0581 - 283 | 0.82 ng/mL | 1200 - 0.03 ng/mL - 3 % | median scr 2.3; (1.2 +/- 0.4); NO |
| | | | | cv scr 62 %; (< 50%); NO |
| 3 | 528033 - 6.24 x 10⁵ - 0.8569 - 683 | 12.06 ng/mL | 2811-0.06 ng/mL-0.5 % | median scr 1.0; (1.2 +/-0.4); OK |
| | | | | cv scr 28 %; (< 50%); OK |

## Claims

1. A method for determining a carry over of an analyte from a previous sample into a sample of interest on a liquid chromatography mass spectrometer (LC-MS) device, the method comprising the following steps:
(a) determining at least one chromatogram of said sample of interest on said LC-MS device;
(b) determining a background height of the chromatogram; and
(c) determining the carry over of the analyte from said previous sample into the sample of interest based on the background height.

2. The method of claim 1, wherein said chromatogram is a representation of intensity of an analyte-specific signal over elution time, preferably of analyte quantifier signal intensity over elution time.

3. The method of claim 1 or 2, wherein step c) comprises using a predetermined relationship between the background height and a parameter correlating with the carry over.

4. The method of any one of claims 1 to 3, wherein step b) comprises:
b1) identifying a peak corresponding to the analyte in the chromatogram; and
b2) determining an upper and a lower peak boundary of said peak,
and optionally further comprising step
b3) determining at least one minimum signal intensity value within the upper and lower peak boundary.

5. The method of any one of claims 1 to 4, wherein background height is determined shortly upstream of the upper peak boundary and/or shortly downstream of the lower peak boundary.

6. The method of any one of claims 1 to 5, wherein the method further comprises at least one confirmation step, wherein the confirmation step comprises determining the reliability of the background height.

7. The method of claim 6, wherein the reliability of the background height is determined by calculating a reliability parameter and comparing said reliability parameter to a pre-defined reference, preferably
(i) by determining an average of quantifier/qualifier ratios of background data points, preferably of background data points used for determining background height of the chromatogram, and comparing said average to a pre-defined average reference; and/or
(ii) by determining a variation parameter of background data points, preferably of background data points used for determining background height of the chromatogram, and comparing said variation parameter to a pre-defined variation reference.

8. The method of any one of claims 1 to 7, wherein said method is or is comprised in a method of quality control.

9. A system for determining a concentration of at least one analyte in a sample comprising:
(I) at least one liquid chromatography mass spectrometer (LC-MS) device, wherein the LC-MS device is configured for measuring the analyte in the sample and for determining at least one chromatogram, and
(II) at least one evaluation device, wherein the evaluation device is configured to determine a background height of the chromatogram and for determining a carry over based on the background height.

10. The system of claim 9, wherein the evaluation device is adapted to perform the method for determining a carry over of an analyte according to any one of claims 1 to 9.

11. A method for conducting at least one measurement of an analyte in a sample using at least one liquid chromatography mass spectrometer device, the method comprising the following steps:
(A) conducting at least one first measurement on a first sample;
(B) conducting at least one second measurement on a second sample;
(C) determining a carry over from the first sample into the second sample with the method for determining a carry over according to any one of claims 1 to 8.

12. The method of claim 11, wherein, in case a carry over of the analyte from the first sample to the second sample exceeding a pre-determined threshold is determined, for the analyte in the second sample (i) no determination of the amount in said second sample is provided, (ii) it is indicated that the result of determination is unreliable, and/or (iii) a repeat of the measurement is initiated.

13. The method of claim 11 or 12, comprising quantitatively determining an amount of the analyte in the second sample, preferably wherein said amount is corrected by performing at least steps a) to c) of any one of claims 1 to 9, and subtracting the carry over determined from the quantified result of the analyte of the second sample.

14. A method for determining a relationship between a background height and a carry over of an analyte on a liquid chromatography mass spectrometer device, the method comprising the following steps:
(i) conducting at least one first measurement for a first sample;
(ii) conducting at least one second measurement for a second sample and determining at least one chromatogram thereof, wherein said second sample is devoid of said analyte, preferably is a control sample, as for example a buffer control sample, a blank control sample, or a matrix control sample;
(iii) determining an apparent amount or a signal corresponding thereto of the analyte in said second sample;
(iv) determining a background height of the chromatogram; and
(v) repeating steps (i) to (iv) for at least two further first samples, said first samples comprising non-identical concentrations of said analyte,
(vi) correlating the apparent amount of the analyte or a signal corresponding thereto determined in steps (iii) with the background heights determined in step (iv),
(vii) thereby, determining a relationship between a background height and a carry over of an analyte.

15. A computer program product having program code means, wherein the program code means can be stored or are stored on a storage medium, for performing at least steps b) and c) of the method according to any one of claims 1 to 8 and/or at least step (vi) in combination with steps (iii) and (iv) of the method according to claim 14 when the program code means are executed on a computer or on a computer network.

## Patentansprüche

1. Verfahren zum Bestimmen eines Übertrags eines Analyten aus einer vorhergehenden Probe in eine Probe von Interesse auf einer Flüssigchromatographie-Massenspektrometer-(LC-MS-)Vorrichtung, wobei das Verfahren die folgenden Schritte umfasst:
(a) Bestimmen mindestens eines Chromatogramms der Probe von Interesse auf der LC-MS-Vorrichtung;
(b) Bestimmen einer Hintergrundhöhe des Chromatogramms und
(c) Bestimmen des Übertrags des Analyten aus der vorhergehenden Probe in die Probe von Interesse basierend auf der Hintergrundhöhe.

2. Verfahren nach Anspruch 1, wobei das Chromatogramm eine Darstellung einer Intensität eines analytspezifischen Signals über eine Elutionszeit, vorzugsweise einer Analytquantifizierersignalintensität über eine Elutionszeit ist.

3. Verfahren nach Anspruch 1 oder 2, wobei Schritt c) das Verwenden einer vorbestimmten Beziehung zwischen der Hintergrundhöhe und einem Parameter, der mit dem Übertrag korreliert, umfasst.

4. Verfahren nach einem der Ansprüche 1 bis 3, wobei Schritt b) Folgendes umfasst:
b1) Identifizieren eines Peaks, der dem Analyten entspricht, in dem Chromatogramm und
b2) Bestimmen einer oberen und einer unteren Peakgrenze des Peaks und gegebenenfalls ferner den folgenden Schritt umfasst
b3) Bestimmen mindestens eines minimalen Signalintensitätswertes innerhalb der oberen und unteren Peakgrenze.

5. Verfahren nach einem der Ansprüche 1 bis 4, wobei die Hintergrundhöhe kurz vor der oberen Peakgrenze und/oder kurz nach der unteren Peakgrenze bestimmt wird.

6. Verfahren nach einem der Ansprüche 1 bis 5, wobei das Verfahren ferner mindestens einen Bestätigungsschritt umfasst, wobei der Bestätigungsschritt das Bestimmen der Verlässlichkeit der Hintergrundhöhe umfasst.

7. Verfahren nach Anspruch 6, wobei die Verlässlichkeit der Hintergrundhöhe durch Berechnen eines Verlässlichkeitsparameters und Vergleichen des Verlässlichkeitsparameters mit einer vordefinierten Referenz bestimmt wird, vorzugsweise
(i) durch Bestimmen eines Durchschnitts von Quantifizierer-Qualifizierer-Verhältnissen von Hintergrunddatenpunkten, vorzugsweise von Hintergrunddatenpunkten, die zum Bestimmen der Hintergrundhöhe des Chromatogramms verwendet werden, und Vergleichen des Durchschnitts mit einer vordefinierten Durchschnittsreferenz; und/oder
(ii) durch Bestimmen eines Variationsparameters von Hintergrunddatenpunkten, vorzugsweise von Hintergrunddatenpunkten, die zum Bestimmen der Hintergrundhöhe des Chromatogramms verwendet werden, und Vergleichen des Variationsparameters mit einer vordefinierten Variationsreferenz.

8. Verfahren nach einem der Ansprüche 1 bis 7, wobei das Verfahren ein Verfahren zur Qualitätskontrolle ist oder in einem solchen enthalten ist.

9. System zum Bestimmen einer Konzentration mindestens eines Analyten in einer Probe, umfassend:
(I) mindestens eine Flüssigchromatographie-Massenspektrometer-(LC-MS-)Vorrichtung, wobei die LC-MS-Vorrichtung dafür ausgebildet ist, den Analyten in der Probe zu messen und mindestens ein Chromatogramm zu bestimmen, und
(II) mindestens eine Auswertevorrichtung, wobei die Auswertevorrichtung dafür ausgebildet ist, eine Hintergrundhöhe des Chromatogramms zu bestimmen und einen Übertrag basierend auf der Hintergrundhöhe zu bestimmen.

10. System nach Anspruch 9, wobei die Auswertevorrichtung dafür ausgelegt ist, das Verfahren zum Bestimmen eines Übertrags eines Analyten nach einem der Ansprüche 1 bis 9 auszuführen.

11. Verfahren zum Vornehmen mindestens einer Messung eines Analyten in einer Probe unter Verwendung mindestens einer Flüssigchromatographie-Massenspektrometer-Vorrichtung, wobei das Verfahren die folgenden Schritte umfasst:
(A) Vornehmen mindestens einer ersten Messung an einer ersten Probe;
(B) Vornehmen mindestens einer zweiten Messung an einer zweiten Probe;
(C) Bestimmen eines Übertrags aus der ersten Probe in die zweite Probe mit dem Verfahren zum Bestimmen eines Übertrags nach einem der Ansprüche 1 bis 8.

12. Verfahren nach Anspruch 11, wobei, wenn bestimmt wird, dass ein Übertrag des Analyten aus der ersten Probe in die zweite Probe eine vorbestimmte Schwelle überschreitet, für den Analyten in der zweiten Probe (i) keine Bestimmung der Menge in der zweiten Probe bereitgestellt wird, (ii) angegeben wird, dass das Ergebnis der Bestimmung unverlässlich ist, und/oder (iii) eine Wiederholung der Messung initiiert wird.

13. Verfahren nach Anspruch 11 oder 12, umfassend das quantitative Bestimmen einer Menge des Analyten in der zweiten Probe, vorzugsweise wobei die Menge mittels Durchführen mindestens der Schritte a) bis c) nach einem der Ansprüche 1 bis 9 korrigiert wird, und das Subtrahieren des Übertrags, der aus dem quantifizierten Ergebnis des Analyten der zweiten Probe bestimmt wurde.

14. Verfahren zum Bestimmen einer Beziehung zwischen einer Hintergrundhöhe und eines Übertrags eines Analyten auf einer Flüssigchromatographie-Massenspektrometer-Vorrichtung, wobei das Verfahren die folgenden Schritte umfasst:
(i) Vornehmen mindestens einer ersten Messung für eine erste Probe;
(ii) Vornehmen mindestens einer zweiten Messung für eine zweite Probe und Bestimmen mindestens eines Chromatogramms davon, wobei die zweite Probe den Analyten nicht aufweist, vorzugsweise eine Kontrollprobe ist, wie beispielsweise eine Pufferkontrollprobe, eine Blindkontrollprobe oder eine Matrixkontrollprobe;
(iii) Bestimmen einer scheinbaren Menge oder eines dieser entsprechenden Signals des Analyten in der zweiten Probe;
(iv) Bestimmen einer Hintergrundhöhe des Chromatogramms; und
(v) Wiederholen der Schritte (i) bis (iv) für mindestens zwei weitere erste Proben, wobei die ersten Proben nicht identische Konzentrationen des Analyten umfassen,
(vi) Korrelieren der scheinbaren Menge des Analyten oder eines Signals, das dieser entspricht, die in Schritt (iii) bestimmt wurden, mit den in Schritt (iv) bestimmten Hintergrundhöhen,
(vii) wodurch eine Beziehung zwischen einer Hintergrundhöhe und eines Übertrags eines Analyten bestimmt wird.

15. Computerprogrammprodukt mit Programmkodeeinrichtungen, wobei die Programmkodeeinrichtungen auf einem Speichermedium gespeichert werden können oder gespeichert sind, zum Ausführen mindestens der Schritte b) und c) des Verfahrens nach einem der Ansprüche 1 bis 8 und/oder mindestens Schritt (vi) in Kombination mit den Schritten (iii) und (iv) des Verfahrens nach Anspruch 14, wenn die Programmkodeeinrichtungen auf einem Computer oder auf einem Computernetzwerk ausgeführt werden.

## Revendications

1. Procédé de détermination d'un transfert résiduel d'un analyte d'un échantillon précédent dans un échantillon d'intérêt sur un dispositif de chromatographie liquide-spectrométrie de masse (LC-MS), le procédé comprenant les étapes suivantes :
(a) détermination d'au moins un chromatogramme dudit échantillon d'intérêt sur ledit dispositif LC-MS ;
(b) détermination d'une hauteur du bruit de fond du chromatogramme ; et
(c) détermination du transfert résiduel de l'analyte dudit échantillon précédent dans l'échantillon d'intérêt en se basant sur la hauteur du bruit de fond.

2. Procédé selon la revendication 1, dans lequel ledit chromatogramme est une représentation d'intensité d'un signal spécifique à l'analyte en fonction du temps d'élution, de préférence d'intensité de signal de quantification d'analyte en fonction du temps d'élution.

3. Procédé selon la revendication 1 ou 2, dans lequel l'étape c) comprend l'utilisation d'une relation prédéterminée entre la hauteur du bruit de fond et un paramètre corrélé au transfert résiduel.

4. Procédé selon l'une quelconque des revendications 1 à 3, dans lequel l'étape b) comprend :
b1) identification d'un pic correspondant à l'analyte dans le chromatogramme ; et
b2) détermination d'une limite de pic supérieure et d'une limite de pic inférieure dudit pic, et éventuellement comprenant en outre l'étape
b3) détermination d'au moins une valeur d'intensité de signal minimum à l'intérieur de la limite de pic supérieure et inférieure.

5. Procédé selon l'une quelconque des revendications 1 à 4, dans lequel la hauteur du bruit de fond est déterminée légèrement en amont de la limite de pic supérieure et/ou légèrement en aval de la limite de pic inférieure.

6. Procédé selon l'une quelconque des revendications 1 à 5, dans lequel le procédé comprend en outre au moins une étape de confirmation, dans lequel l'étape de confirmation comprend la détermination de la fiabilité de la hauteur du bruit de fond.

7. Procédé selon la revendication 6, dans lequel la fiabilité de la hauteur du bruit de fond est déterminée en calculant un paramètre de fiabilité et en comparant ledit paramètre de fiabilité à une référence prédéfinie, de préférence
(i) en déterminant une moyenne des rapports quantification/qualification des points de données de bruit de fond, de préférence des points de données de bruit de fond utilisés pour la détermination de la hauteur du bruit de fond du chromatogramme, et en comparant ladite moyenne à une moyenne de référence prédéfinie ; et/ou
(ii) en déterminant un paramètre de variation des points de données de bruit de fond, de préférence des points de données de bruit de fond utilisés pour la détermination de la hauteur du bruit de fond du chromatogramme, et en comparant ledit paramètre de variation à une variation de référence prédéfinie.

8. Procédé selon l'une quelconque des revendications 1 à 7, dans lequel ledit procédé est ou est compris dans un procédé de contrôle qualité.

9. Système de détermination d'une concentration d'au moins un analyte dans un échantillon comprenant :
(I) au moins un dispositif de chromatographie liquide-spectrométrie de masse (LC-MS), le dispositif LC-MS étant conçu pour mesurer l'analyte dans l'échantillon et pour déterminer au moins un chromatogramme, et
(II) au moins un dispositif d'évaluation, le dispositif d'évaluation étant configuré pour déterminer une hauteur du bruit de fond du chromatogramme et pour déterminer un transfert résiduel en se basant sur la hauteur du bruit de fond.

10. Système selon la revendication 9, dans lequel le dispositif d'évaluation est adapté pour réaliser le procédé de détermination d'un transfert résiduel d'un analyte selon l'une quelconque des revendications 1 à 9.

11. Procédé de réalisation d'au moins une mesure d'un analyte dans un échantillon en utilisant au moins un dispositif de chromatographie liquide-spectrométrie de masse, le procédé comprenant les étapes suivantes :
(A) réalisation d'au moins une première mesure sur un premier échantillon ;
(B) réalisation d'au moins une deuxième mesure sur un deuxième échantillon ;
(C) détermination d'un transfert résiduel du premier échantillon dans le deuxième échantillon avec le procédé de détermination d'un transfert résiduel selon l'une quelconque des revendications 1 à 8.

12. Procédé selon la revendication 11, dans lequel, dans le cas où un transfert résiduel de l'analyte du premier échantillon au deuxième échantillon dépassant un seuil prédéterminé est déterminé, pour l'analyte dans le deuxième échantillon (i) aucune détermination de la quantité dans ledit deuxième échantillon n'est fournie, (ii) il est indiqué que le résultat de la détermination n'est pas fiable, et/ou (iii) une répétition de la mesure est initiée.

13. Procédé selon la revendication 11 ou 12, comprenant la détermination de manière quantitative d'une quantité de l'analyte dans le deuxième échantillon, de préférence dans lequel ladite quantité est corrigée en effectuant au moins les étapes a) à c) selon l'une quelconque des revendications 1 à 9, et en soustrayant le transfert résiduel déterminé à partir du résultat quantifié de l'analyte du deuxième échantillon.

14. Procédé de détermination d'une relation entre une hauteur du bruit de fond et un transfert résiduel d'un analyte sur un dispositif de chromatographie liquide-spectrométrie de masse, le procédé comprenant les étapes suivantes :
(i) réalisation d'au moins une première mesure pour un premier échantillon ;
(ii) réalisation d'au moins une deuxième mesure pour un deuxième échantillon et détermination d'au moins un chromatogramme de celles-ci, ledit deuxième échantillon étant exempt dudit analyte, de préférence étant un échantillon de contrôle, comme par exemple un échantillon de contrôle tampon, un échantillon de contrôle blanc ou un échantillon de contrôle de matrice ;
(iii) détermination d'une quantité apparente ou d'un signal correspondant à celle-ci de l'analyte dans ledit deuxième échantillon ;
(iv) détermination d'une hauteur du bruit de fond du chromatogramme ; et
(v) répétition des étapes (i) à (iv) pour au moins deux premiers échantillons supplémentaires, lesdits premiers échantillons comprenant des concentrations non identiques dudit analyte,
(vi) corrélation de la quantité apparente de l'analyte ou d'un signal correspondant à celui-ci déterminé à l'étape (iii) avec les hauteurs du bruit de fond déterminées à l'étape (iv),
(vii) détermination ainsi d'une relation entre une hauteur du bruit de fond et un transfert résiduel d'un analyte.

15. Produit de programme informatique ayant des moyens de code de programme, dans lequel les moyens de code de programme peuvent être stockés ou sont stockés sur un support de stockage, pour effectuer au moins les étapes b) et c) du procédé selon l'une quelconque des revendications 1 à 8 et/ou au moins l'étape (iv) en association avec les étapes (iii) et (iv) du procédé selon la revendication 14 lorsque les moyens de code de programme sont exécutés sur un ordinateur ou sur un réseau informatique.
